# EUROPÄISCHE PATENTANMELDUNG

(11) **EP 0 726 387 A2**
(43) Veröffentlichungstag der Anmeldung: **14.08.1996**
(21) Anmeldenummer: 96810055.2
(22) Anmeldetag: 29.01.1996
(51) Int. Cl.: F02C 7/22, F02C 9/26, F23N 5/16

(54) **Vorrichtung zur Dämpfung thermoakustischer Druckschwingungen**

(30) Priorität: 13.02.1995 DE 19504610
(71) Anmelder: ABB Management AG, CH-5401 Baden (CH)
(72) Erfinder: Joos, Franz, Dr., D-79809 Weilheim (DE); Liu, Yansong, Dr., CH.5401 Baden (CH)

(57) **Zusammenfassung**

Bei einer Vorrichtung zur Dämpfung von thermoakustischen Druckschwingungen, welche bei der Verbrennung eines einströmenden Brennstoffs (2) in einer Brennkammer (17) entstehen, wird eine in einer Brennstoffleitung (1) zu einem Brenner (12) koaxial rotierende Lochscheibe (3), durch deren exzentrische Öffnung (4) Brennstoff (2) strömt, senkrecht zur Rotationsachse verschiebbar angeordnet. Dabei werden Mittel (10, 11) für die Rotation und die Verschiebung der Lochscheibe mit einem Mittel (13) zur Messung der Druckschwingungsamplitude und -frequenz in der Brennkammer (17) über eine Regeleinrichtung (18) verbunden. Diese Regeleinrichtung (18) wirkt entsprechend den lastabhängigen Druckschwingungen in der Brennkammer (17) auf die Drehzahl und die Verschiebung der Lochscheibe (3) ein.

## Beschreibung

### TECHNISCHES GEBIET

Die Erfindung betrifft eine Vorrichtung zur Dämpfung von thermoakustischen Druckschwingungen, welche bei der Verbrennung eines einströmenden Brennstoffs in eine Brennkammer entstehen.

### STAND DER TECHNIK

Bei der Verbrennung von Brennstoffen in einer Brennkammer kann es aufgrund der Verbrennungsvorgänge zu Druckschwankungen kommen, die unter geeigneten Verhältnissen thermoakustische Schwingungen anregen. Diese Schwingungen begünstigen den Anstieg von Schadstoffemissionen durch das Entstehen einer inhomogenen Verbrennung. Bei Schwingungsresonanz stellen die Druckschwingungen für die Brennkammer eine unerwünschte Materialbeanspruchung dar und beeinträchtigen die Flamme bis hin zum Verlöschen.

Um derartige thermoakustische Schwingungen zu dämpfen, sind bereits verschiedene Vorrichtungen und Verfahren vorgeschlagen worden, bei denen die Brennkammer beispielsweise in ihren Schwingungseigenschaften beeinflusst wird, oder die Flamme in deren Flammenfläche und/oder Brennort gesteuert wird. Eine periodische Variation der Strömungsmengen von flüssigen Brennstoffen ist ebenfalls zur Schwingungsreduktion vorgeschlagen worden.

Ein solches Verfahren mit Vorrichtung zur Schwingungsdämpfung ist bekannt aus DE Al 4040745. Nachteilig ist allerdings die ausschliessliche Anwendbarkeit auf flüssige Brennstoffe.

### DARSTELLUNG DER ERFINDUNG

Der Erfindung liegt die Aufgabe zugrunde, thermoakustische Druckschwingungen zu dämpfen, welche bei der Verbrennung von einströmendem Brennstoff in eine Brennkammer entstehen, unabhängig davon, ob der Brennstoff flüssig oder gasförmig ist.

Erfindungsgemäss wird dies durch die kennzeichnenden Merkmale des Anspruchs 1 erreicht.

Ein wesentlicher Vorteil der Erfindung ist darin zu sehen, dass die hier vorgeschlagenen schwingungsdämpfenden Massnahmen auf den in einer Brennstoffleitung strömenden Brennstoff einwirken, und dass die Dämpfungsvorrichtung nicht an einem Ort hoher thermischer Belastungen, wie sie in einer Brennkammer vorherrschen, installiert werden muss.

### KURZE BESCHREIBUNG DER ZEICHNUNG

In der Zeichnung ist ein Ausführungsbeispiel der Erfindung anhand eines Brennersystems vereinfacht dargestellt. Es zeigen:

- Fig. 1: einen Teillängsschnitt eines Brennersystems mit einer Brennstoffleitung, einer Lochscheibe und einer Regeleinrichtung;
- Fig. 2: einen Querschnitt durch die eingebaute Lochscheibe in der Brennstoffleitung;
- Fig. 3: Zwei Beispiele einer periodischen Variation einer Brennstoffströmung.

Es sind nur die für das Verständnis der Erfindung wesentlichen Elemente gezeigt. Die Strömungsrichtung des Brennstoffs und die Bewegungsrichtungen der Lochscheibe sind mit Pfeilen dargestellt.

### WEG ZUR AUSFÜHRUNG DER ERFINDUNG

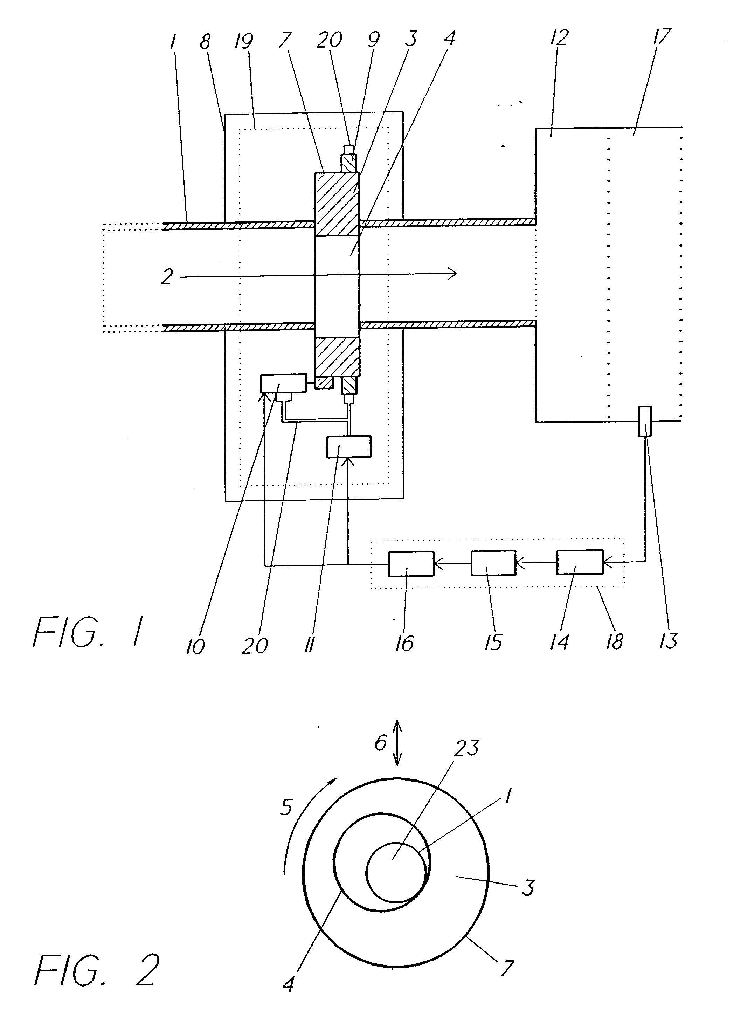

Nach Fig. 1 durchströmt ein flüssiger oder gasförmiger Brennstoff 2 eine Brennstoffleitung 1 und eine exzentrische Öffnung 4 einer Lochscheibe 3. Dabei weisen, wie Fig. 2 zeigt, die Lochscheibe 3, deren exzentrische Öffnung 4 und der Leitungsquerschnitt 23 Kreisquerschnitt auf.

Die Lochscheibe 3 ist an einer Mantelfläche 7 drehbar mit Mitteln 9 gelagert. Dabei verläuft die Drehachse der Lochscheibe parallel zur Brennstoffströmungsrichtung 2. Die Rotation der Lochscheibe 3 erfolgt mittels einer Antriebseinrichtung 10.

Die Lagerung 9 und die Antriebseinrichtung 10 sind über ein Montagegestell 20 mit einer Verschiebeeinrichtung 11 verbunden und stellen zusammen mit der Lochscheibe 3 eine Stellgliedeinheit 19 dar. Fig. 2 zeigt die Verschieberichtung 6, in der die Lochscheibe 3 mit deren Antriebseinrichtung 10 durch die Verschiebeeinrichtung 11 senkrecht zur Brennstoffströmung 2 verschiebbar ist.
Stromabwärts der Lochscheibe 3 ist ein Brenner 12 mit Brennkammer 17 an der Brennstoffleitung 1 angebracht. Eine Regeleinrichtung 18 verbindet einen Drucksensor 13 in der Brennkammer 17 mit der Stellgliedeinheit 19.

In Hintereinanderschaltung umfasst die Regeleinrichtung 18 eine Messwertaufbereitung 14, die eingangsseitig mit dem Drucksensor 13 verbunden ist, eine Messwertverarbeitung 15 und eine Ansteuerung 16, die ausgangsseitig mit der Verschiebeeinrichtung 11 und der Antriebseinrichtung 10 verbunden ist.

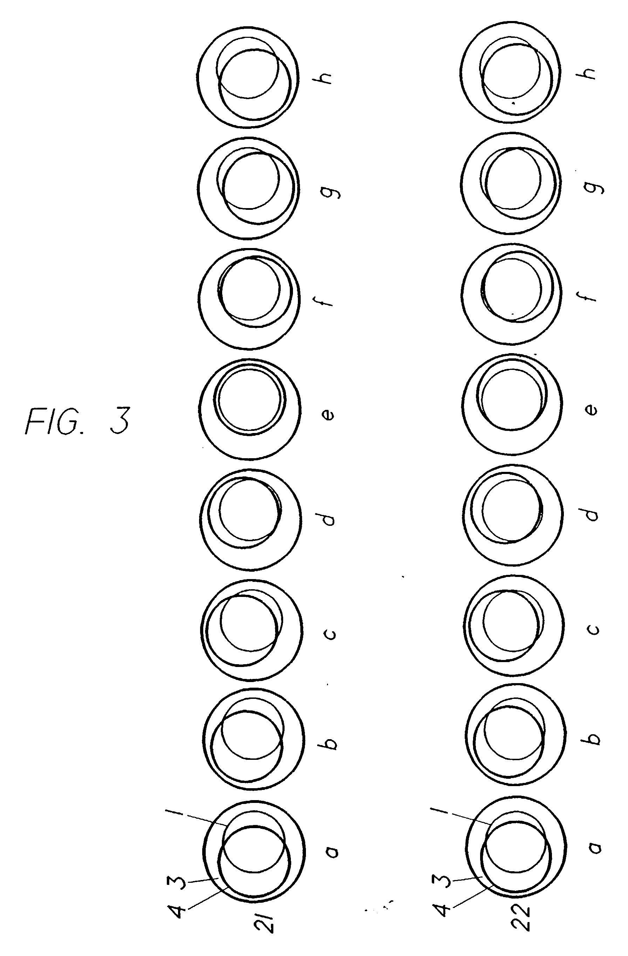

Die bei der Verbrennung des Brennstoffs 2 in der Brennkammer 17 auftretenden Druckschwingungen sind lastabhängig. Sie werden von der Messwertaufbereitung 14 mittels Drucksensor 13 erfasst anschliessend weiterverarbeitet in der Messwertverarbeitung 15 und durch die Steuereinheit 16 werden Signale für die Stellgliedeinrichtung 19 generiert. Dabei ist es das Ziel, wie Fig. 2 und Fig. 3 zeigen, mittels Regelung der Drehung 5 und der Verschiebung 6 der Lochscheibe 3 den vom Brennstoff durchströmten Querschnitt und damit die Brennstoffströmung selbst für eine Reduktion der Brennkammerschwingungen periodisch zu variieren.

Fig. 3 zeigt anhand von acht Momentaufnahmen 21 (a - h) einer Lochscheibenumdrehung die Veränderung der durchströmten Querschnittsfläche. Die Lochscheibenverschiebung ist für die gezeigte Drehung konstant und die Drehwinkeldifferenz zwischen zwei Momentbildern 21 (a - h) beträgt 45°.
Eine Umdrehung mit geänderter Verschiebung der Lochscheibe 3 gegenüber den Momentaufnahmen 21 zeigen die Bilder 22 (a - h). Hier wird ebenfalls eine Lochscheibenumdrehung mit einer Drehwinkeldifferenz von 45° zwischen zwei Bildern dargestellt.
Keine periodische Variation der Brennstoffströmung findet statt, wenn wie in Fig. 2 dargestellt, der Mittelpunkt des Leitungquerschnitts 23 mit der zur Brennstoffströmung 2 parallelen Rotationsachse der Lochscheibe 3 zuammenfällt und dabei der Leitungsquerschnitt 23 nicht verdeckt wird.

Damit durch die Übergänge zwischen der Lochscheibe 3 und der Leitung 1 kein Brennstoff entweicht, ist die Brennstoffleitung im Bereich der Stellgliedeinheit 19 mit einem dichten Gehäuse 8 umgeben.

Selbstverständlich ist die Erfindung nicht auf das gezeigte und beschriebene Ausführungsbeispiel beschränkt. Die exzentrische Öffnung 4 der Lochscheibe 3 ist für eine andere periodische Variation der Brennstoffströmung 2 auch in beliebigen geometrische Formen ausführbar.
Eine nicht zur Brennstoffströmung koaxiale Drehachse der Lochscheibe ist ebenfalls denkbar im Sinne der Erfindung.

### BEZUGSZEICHENLISTE

- 1: Brennstoffleitung
- 2: Brennstoff
- 3: Lochscheibe
- 4: Öffnung
- 5: Rotationsrichtung
- 6: Verschiebungsrichtung
- 7: Mantelfläche
- 8: Gehäuse
- 9: Lagerung
- 10: Rotationsantrieb
- 11: Verschiebungsantrieb
- 12: Brenner
- 13: Drucksensor
- 14: Messwertaufbereitung
- 15: Messwertverarbeitugng
- 16: Ansteuerung
- 17: Brennkammer
- 18: Regeleinrichtung
- 19: Stellgliedeinrichtung
- 20: Montagegestell
- 21: Momentaufnahmen einer Lochscheibenumdrehung (a - h)
- 22: Momentaufnahmen einer Lochscheibenumdrehung (a - h)
- 23: Brennstoffleitungsquerschnitt

## Patentansprüche

1. Vorrichtung zur Dämpfung von thermoakustischen Druckschwingungen, welche bei der Verbrennung eines einströmenden Brennstoffs (2) in eine Brennkammer (17) entstehen,
dadurch gekennzeichnet,
dass in einer Brennstoffleitung (1) zu einem Brenner (12) eine koaxial zur Leitung rotierende Lochscheibe (3), durch deren exzentrische Öffnung (4) Brennstoff (2) strömt, senkrecht zur Rotationsachse verschiebbar angeordnet ist, wobei Mittel (10, 11) für die Rotation und Verschiebung der Lochscheibe mit einem Mittel (13) zur Messung der Druckschwingungsamplitude und -frequenz in der Brennkammer (17) über eine Regeleinrichtung (18) verbunden sind, welche auf die Drehzahl und die Verschiebung der Lochscheibe (3) entsprechend den lastabhängigen Druckschwingungen in der Brennkammer (17) einwirkt.

2. Vorrichtung nach Anspruch 1,
dadurch gekennzeichnet,
dass die Lochscheibe (3) und die exzentrische Öffnung (4) Kreisquerschnitt aufweisen.

3. Vorrichtung nach Anspruch 1,
dadurch gekennzeichnet,
dass die Mittel zur Lagerung (9), Verschiebung (11) und Rotation (10) auf eine Mantelfläche (7) der Lochscheibe (3) einwirken und mit ihr eine Stellgliedeinheit (19) bilden.

4. Vorrichtung nach Anspruch 1,
dadurch gekennzeichnet, dass die Stellgliedeinheit (19) von einem gasdichten Gehäuse (8) umschlossen ist.

5. Vorrichtung nach Anspruch 1,
dadurch gekennzeichnet,
- dass die Regeleinrichtung (18) in Hintereinanderschaltung eine Messwertaufbereitung (14), eine Messwertverarbeitung (15) und eine Ansteuerung (16) umfasst,
- dass das Mittel (13) zur Druckmessung ein Drucksensor ist, welcher auf den Eingang der Messwertaufbereitung einwirkt,
- dass der Ausgang der Ansteuerung (16) mit der Stellgliedeinheit (19) verbunden ist.
